# EUROPÄISCHE PATENTSCHRIFT

(11) **EP 2 788 285 B1**
(45) Veröffentlichungstag und Bekanntmachung des Hinweises auf die Patenterteilung: **18.10.2017**
(21) Anmeldenummer: 12794877.6
(22) Anmeldetag: 28.11.2012
(51) Int. Cl.: C01B 25/163, C08K 3/00, C08K 3/32

(54) **MISCHUNGEN VON ALUMINIUMPHOSPHIT MIT SCHWERLÖSLICHEN ALUMINIUMSALZEN UND FREMDIONEN, VERFAHREN ZU IHRER HERSTELLUNG SOWIE IHRE VERWENDUNG**
MIXTURES OF ALUMINIUM PHOSPHITE WITH SPARINGLY SOLUBLE ALUMINIUM SALTS AND FOREIGN IONS, PROCESS FOR THE PRODUCTION THEREOF AND THE USE THEREOF
MÉLANGES DE PHOSPHITE D'ALUMINIUM AVEC DES SELS D'ALUMINIUM DIFFICILEMENT SOLUBLES ET DES IONS ÉTRANGERS, PROCÉDÉ DE PRODUCTION DESDITS MÉLANGES ET LEUR UTILISATION

(30) Priorität: 05.12.2011 DE 102011120191
(43) Veröffentlichungstag der Anmeldung: 15.10.2014
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Mikulecky, Klaus
(86) Internationale Anmeldenummer: PCT/EP2012/004909
(87) Internationale Veröffentlichungsnummer: WO 2013/083251

(56) Entgegenhaltungen:
- EP-A1- 0 344 321
- EP-A1- 0 896 023
- R.E. MORRIS, M.P. ATTFIELD & A.K. CHEETHAM: "Synthesis and structures of two isostructural phosphites, Al2(HPO3)3 and Ga2(HPO3)3", ACTA CRYST. C, Bd. c50, 1994, Seiten 473-476, XP009166285,

## Beschreibung

Die vorliegende Erfindung betrifft Mischungen von Aluminiumphosphit mit schwerlöslichen Aluminiumsalzen und stickstofffreien Fremdionen, Verfahren zu ihrer Herstellung sowie ihre Verwendung

Nach dem Stand der Technik sind reine Aluminiumphosphite bekannt. Diese sind mikroporöse Verbindungen ähnlich Zeolithen, in denen Aluminium-Ionen und Phosphit-Ionen ein dreidimensionales Netzwerk von mehrgliedrigen Ringen bilden. Sie können Kristallwasser enthalten oder unter Verlust der Kristallstruktur Kristallwasser abgeben und damit Anhydrate bilden. Üblicherweise werden sie durch hydrothermale Kristallisation hergestellt, d. h. oberhalb des Siedepunktes von Wasser unter dessen Eigendruck.

Als Rohstoffe dienen dabei Aluminiumquellen wie z. B. leichtlösliche Aluminiumsalze, als Phosphorquellen werden Alkaliphosphit oder phosphorige Säure eingesetzt.

Zur Erleichterung der Kristallisation (Yang. Shiyou Xuebao, Shiyou Jiagong (2006), 22(Suppl.), 79-81) werden Polystickstoffverbindungen als strukturdirigierende Agenzien - auch Template genannt - zugesetzt. Nachteilig ist, dass Template die Thermostabilität des Produktes herabsetzen können. Nachteilig ist auch, dass leichtlösliche Aluminiumsalze und Alkaliphosphite das Entfernen der zwangsläufig anfallenden Alkalisalze erfordern.

Weiterhin sind Mischungen von Aluminiumphosphit und Aluminiumoxid bzw. Aluminiumhydroxid bekannt.

Der vorliegenden Erfindung liegt die Aufgabe zugrunde, Mischungen von Aluminiumphosphit mit schwerlöslichen Aluminiumsalzen und ausgewählten Fremdionen zur Verfügung zu stellen, die frei von Templaten sind. Weiterhin bestand die Aufgabe, ein Verfahren zur Verfügung zu stellen, das ohne die Template und ohne die Verwendung von leichtlöslichen Aluminium- bzw. Phosphitsalzen auskommt.

Es wurde überraschend gefunden, dass die erfindungsgemäßen Mischungen von Aluminiumphosphit mit schwerlöslichen Aluminiumsalzen und stickstofffreien Fremdionen als Synergisten zu Flammschutzmitteln verwendbar sind. Diese Flammschutzmittelsynergisten müssen selbst nicht flammschutzaktiv sein, können aber die Wirksamkeit von Flammschutzmitteln wesentlich steigern. Diese Flammschutzmittelsynergisten werden zusammen mit den Flammschutzmitteln und weiteren Polymeradditiven durch Kneten und Extrusion mit dem flammzuschützenden Polymer vermischt. Das entstehende Polymergemisch ist dann flammgeschützt. Diese Verarbeitung geschieht bei Temperaturen, bei denen das Polymer geschmolzen vorliegt und die für kurze Zeit 320 °C deutlich überschreiten können. Synergisten müssen diese Temperaturen unzersetzt überstehen können, um ihre Wirkung beizubehalten. Überraschend wurde nun gefunden, dass die erfindungsgemäßen Mischungen von Aluminiumphosphit mit schwerlöslichen Aluminiumsalzen und stickstofffreien Fremdionen deutlich thermostabiler als reine Aluminiumphosphite sind.

Weiterhin sind nach dem Stand der Technik Aluminiumphosphithydrate bekannt. Nachteilig ist die bei Erhitzung eintretende Wasserabspaltung. Letztere schadet bei der Verarbeitung des Synergisten zum flammgeschützen Polymer. Die erfindungsgemäße Aufgabe wird durch die erfindungsgemäßen Mischungen von Aluminiumphosphit mit schwerlöslichen Aluminiumsalzen und stickstofffreien Fremdionen gelöst, da diese weitgehend kristallwasserfrei sind.

Die Erfindung betrifft daher Mischungen von Aluminiumphosphit mit schwerlöslichen Aluminiumsalzen und stickstofffreien Fremdionen, enthaltend 80 bis 99,898 Gew.-% Aluminiumphosphit der Formel (I)

Al₂(HPO₃)₃ x H₂O (I)

worin x 0 bis 4 bedeutet,
0,1 bis 10 Gew.-% schwerlösliche Aluminiumsalze und
0,002 bis 10 Gew.-% stickstofffreie Fremdionen.

Bevorzugt sind Mischungen, enthaltend
88 bis 99,79 Gew.-% Aluminiumphosphit der Formel (I),
worin x 0 bis 4 bedeutet,
0,2 bis 5 Gew.-% schwerlösliche Aluminiumsalze und
0,01 bis 7 Gew.-% stickstofffreie Fremdionen.

Besonders bevorzugt sind Mischungen, enthaltend
94 bis 99,4 Gew.-% Aluminiumphosphit der Formel (I),
worin x 0 bis 0,1 bedeutet,
0,3 bis 3 Gew.-% schwerlösliche Aluminiumsalze und
0,3 bis 3 Gew.-% stickstofffreie Fremdionen.

Bevorzugt handelt es sich bei den schwerlöslichen Aluminiumsalzen um Aluminiumhydroxid, Aluminiumhydroxychlorid, Polyaluminiumhydroxyverbindungen, Aluminiumcarbonate, Hydrotalcite (Mg₆Al₂(OH)₁₆CO₃ x nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Aluminiumsulfat und/oder Alunit.

Bevorzugt handelt es sich bei den stickstofffreien Fremdionen um Chloride, komplexe Chloride, Bromide; um Hydroxide, Peroxide, Peroxidhydrate, Sulfite, Sulfate, Sulfathydrate, saure Sulfate, Hydrogensulfate, Peroxosulfate, Peroxodisulfate; um Carbonate, Percarbonate, Stannate; um Borate, Perborate, Perborathydrate; um Formiate, Acetate, Propionate, Lactate und/oder Ascorbate und/oder um Kationen der Elemente Li, Na, K, Mg, Ca, Ba, Pb, Sn, Cu, Zn, La, Ce, Ti, Zr, V, Cr, Mn, Fe, Co und/oder Ni.

Die Erfindung betrifft auch ein Verfahren zur Herstellung von Mischungen von Aluminiumphosphit mit schwerlöslichen Aluminiumsalzen und stickstofffreien Fremdionen nach einem oder mehreren der Ansprüche 1 bis 5, dadurch gekennzeichnet, dass man im Verhältnis 2,5 bis 3,5 mol einer nichtsalzartigen Phosphorquelle mit 2 mol schwerlöslichem Aluminiumsalz in Gegenwart einer Hilfssäure bei 50 bis 180 °C in einem Lösungsmittel und einer Feststoffkonzentration von 2 bis 60 % kristallisiert.

Bevorzugt handelt es sich bei den schwerlöslichen Aluminiumsalzen um Aluminiumhydroxid, Aluminiumhydroxychlorid, Polyaluminiumhydroxyverbindungen, Aluminiumcarbonate, Hydrotalcite (Mg₆Al₂(OH)₁₆CO₃ x nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Aluminiumsulfat und/oder Alunit und bei der nichtsalzartigen Phosphorquelle um phosphorige Säure, Phosphortrioxid, Phosphortrichlorid und/oder Hypophosphit.

Bevorzugt handelt es sich bei der Hilfssäure um Salzsäure, hypochlorige Säure, chlorige Säure, Chlorsäure, Bromwasserstoff, Flusssäure, Jodwasserstoff, Periodsäure, Perchlorsäure, Schwefelsäure, Hydrogensulfat, schweflige Säure, Hydrogensulfite, Peroxoschwefelsäure, Peroxodischwefelsäure, Phosphorsäure, phosphorige Säure, Peroxophosphorsäure, hypophosphorige Säure, Kohlensäure, Kieselsäure, Hexafluorokieselsäure, Borsäure und/oder Carbonsäuren.

Die Erfindung betrifft auch die Verwendung von Mischungen von Aluminiumphosphit mit schwerlöslichen Aluminiumsalzen und stickstofffreien Fremdionen nach einem oder mehreren der Ansprüche 1 bis 5 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch-und Reinigungsmittelanwendungen, in Elektronikanwendungen.

Gegenstand der vorliegenden Erfindung ist zudem die Verwendung Mischungen von Aluminiumphosphit mit schwerlöslichen Aluminiumsalzen und stickstofffreien Fremdionen nach einem oder mehreren der Ansprüche 1 bis 5 als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist und als Synergist in Flammschutzmittel-Mischungen .

Die Erfindung betrifft auch flammgeschützte thermoplastische oder duroplastische Polymerformmassen, Polymer-Formkörper, -Filme, -Fäden und -Fasern enthaltend 0,1 bis 45 Gew.-% Mischungen von Aluminiumphosphit mit schwerlöslichen Aluminiumsalzen und stickstofffreien Fremdionen nach einem oder mehreren der Ansprüche 1 bis 5, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft ebenfalls flammgeschützte thermoplastische oder duroplastische Polymerformmassen, Polymer-Formkörper, -Filme, -Fäden und -Fasern enthaltend 0,1 bis 45 Gew.-% einer Flammschutzmittel-Mischung, welche 0,1 bis 50 Gew.-% Mischungen von Aluminiumphosphit mit schwerlöslichen Aluminiumsalzen und stickstofffreien Fremdionen nach einem oder mehreren der Ansprüche 1 bis 5 und 50 bis 99,9 Gew.-% Flammschutzmittel enthält, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt handelt es sich bei dem Flammschutzmittel in der vorgenannten Verwendung um Dialkylphosphinsäuren und/oder deren Salze und/oder um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat.

Besonders bevorzugt handelt es sich bei dem Flammschutzmittel in der vorgenannten Verwendung um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat.

Bevorzugt handelt es sich bei dem Flammschutzmittel in der vorgenannten Verwendung auch um Aluminiumhypophosphit, Zinkhypophosphit, Calciumhypophosphit, Natriumphosphit, Monophenylphosphinsäure und deren Salze, Mischungen von Dialkylphosphinsäuren und deren Salze und Monoalkylphosphinsäuren und deren Salze, 2-Carboxyethyl-alkylphosphinsäure und deren Salze, 2-Carboxyethyl-methylphosphinsäure und deren Salze, 2-Carboxyethyl-arylphosphinsäure und deren Salze, 2-Carboxyethylphenylphosphinsäure und deren Salze, Oxa-10-phosphaphenanthrene (DOPO) und dessen Salze und Addukte an para-Benzochinon bzw. Itaconsäure und deren Salze.

Bevorzugt bedeutet x auch 0,01 bis 0,1.

Erfindungsgemäße Mischungen von Aluminiumphosphit und schwerlöslichen Aluminiumsalzen entstehen bei der Kristallisation als Zwangskristallisat. Bevorzugt bilden die schwerlöslichen Aluminiumsalze den Kern der kristallisierten Körner im Sinne von Kern-Schale-Kristallisaten. Aluminiumphosphit bildet die Schale. Bevorzugt enthält das Aluminiumphosphit stickstofffreie Fremdionen. Die stickstofffreien Fremdionen sind chemisch in das Aluminiumphosphit gebunden und über Reinigungsverfahren nicht entfernbar. Sie unterscheiden sich damit auch von reinen physikalischen Mischungen, in denen die vorgenannten Komponenten nebeneinander vorliegen und ggf. getrennt werden können. Dies ist bei den erfindungsgemäßen Mischungen von Aluminiumphosphit mit schwerlöslichen Aluminiumsalzen und stickstofffreien Fremdionen nicht der Fall.

Bevorzugte stickstofffreie Fremdionen sind Na, K, Ca, Mg.

Bevorzugte stickstofffreie Fremdionen sind auch Anionen bzw. Oxoanionen der Elemente der siebten Hauptgruppe, wie Chloride, komplexe Chloride, Bromide, Chlorate und Perchlorate.

Bevorzugte stickstofffreie Fremdionen sind Anionen bzw. Oxoanionen der Elemente der sechsten Hauptgruppe, wie Hydroxide, Peroxide, Peroxidhydrate, Sulfite, Sulfate, Sulfathydrate, Hydrogensulfate, Peroxosulfate und Peroxodisulfate.

Bevorzugte stickstofffreie Fremdionen sind Anionen bzw. Oxoanionen der Elemente der fünften Hauptgruppe, wieHydrogenphosphite, Phosphite, Hypophosphit, Phosphat, Hydrogenphosphat und Dihydrogenphosphat.

Bevorzugte stickstofffreie Fremdionen sind Anionen bzw. Oxoanionen der Elemente der vierten Hauptgruppe, wie Carbonate, Percarbonate und Stannate.

Bevorzugte stickstofffreie Fremdionen sind Anionen bzw. Oxoanionen der Elemente der dritten Hauptgruppe, wie Borate, Perborate und Perborathydrate.

Bevorzugte stickstoffreie Fremdionen, wie Anionen von Carbonsäuren sind Formiate, Acetate, Propionate, Lactate, Ascorbate und Tartrate.

Bevorzugt weisen die erfindungsgemäßen Mischungen von Aluminiumphosphit mit schwerlöslichen Aluminiumsalzen und stickstofffreien Fremdionen eine Teilchengröße von 0,1 bis 1000 µm und eine Schüttdichte von 80 bis 800 g/l, besonders bevorzugt von 200 bis 700 g/l auf.

Bevorzugt weisen die erfindungsgemäßen Mischungen von Aluminiumphosphit mit schwerlöslichen Aluminiumsalzen und stickstofffreien Fremdionen L-Farbwerte von 85 bis 99,9, besonders bevorzugt von 90 bis 98 auf.

Bevorzugt weisen die erfindungsgemäßen Mischungen von Aluminiumphosphit mit schwerlöslichen Aluminiumsalzen und stickstofffreien Fremdionen a-Farbwerte von -4 bis +9, besonders bevorzugt -2 bis +6, auf.

Bevorzugt weisen die erfindungsgemäßen Mischungen von Aluminiumphosphit mit schwerlöslichen Aluminiumsalzen und stickstofffreien Fremdionen b-Farbwerte von -2 bis +6, besonders bevorzugt -1 bis +3, auf.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Beim erfindungsgemäßen Verfahren wird eine Aluminiumquelle, bevorzugt sind dies schwerlösliche Aluminiumsalze, wie oben beschrieben, und eine nichtsalzartige Phosphorquelle in Gegenwart einer Hilfssäure kristallisiert. Fakultativ kann die Hilfssäure mit Stickstofffreier Base neutralisiert werden.

Bevorzugte nichtsalzartige Phosphorquellen sind Phosphorige Säure oder Vorstufen, die unter den Bedingungen des Verfahrens Phosphitionen bilden können, z. B. Phosphortrioxid (P₂O₆), das unter Hydrolyse phosphorige Säure bilden kann, Phosphortrichlorid oder Hypophosphit, das durch Oxidation in Phosphit umgewandelt werden kann.

Das erfindungsgemäße Verfahren vermeidet die Verwendung von Templaten, die das Abwasser belasten oder aufwendig entfernt werden müssen oder beim Verbleib im Produkt die thermische Stabilität verschlechtern können.

Das erfindungsgemäße Verfahren vermeidet auch die Verwendung von leichtlöslichen Aluminiumsalzen bzw. Phosphitsalzen, es werden stattdessen schwerlösliche Aluminiumsalze und nicht salzartige Phosphorquellen eingesetzt. Nachteilig ist hierbei eigentlich die unzureichende Umsetzung, da das schwerlösliche Aluminiumphosphit auf dem Rohstoff schalenförmig aufkristallisiert und so den Reaktionsfortschritt verhindert.

Überraschenderweise ermöglicht das erfindungsgemäße Verfahren dagegen den vollständigen Umsatz aller Edukte durch vollständiges oder partielles Auflösen der unlöslichen Aluminiumquelle. Das gelöste Aluminium kann mit der Phosphorquelle auskristallisieren. Partielles Auflösen erfolgt mit katalytischen bzw. unterstöchiometrischen Mengen von Hilfssäure. Dadurch werden weniger Rohstoffe (Säure) verbraucht und weniger Abfallstoffe (Salze) freigesetzt, als wenn die phosphorige Säure im Überschuss eingesetzt würde, um den gleichen Effekt zu erzielen.

Bevorzugte Hilfssäuren sind Säuren und Oxosäuren der Elemente der
7. Hauptgruppe des periodischen Systems der Elemente, der 6. Hauptgruppe, der 4. Hauptgruppe oder Carbonsäuren.

Besonders geeignet sind Salzsäure, Flusssäure, Chlorsäure, Perchlorsäure, Schwefelsäure, schweflige Säure, Kohlensäure, Ameisensäure, Essigsäure, Propionsäure, Milchsäure, Ascorbinsäure und Weinsäure.

Bevorzugt wird die Hilfssäure selbst dann mit unterstöchiometrischen Mengen Base neutralisiert.

Bevorzugte Basen hierfür sind Alkali- und Erdalkalihydroxide wie z. B. Natronlauge und Kalilauge unterschiedlicher Konzentrationen, Kalkmilch, gelöschter Kalk und/oder Barytwasser.

Bevorzugte Reaktionsbedingungen sind Temperaturen von 0 bis 300 °C, besonders bevorzugt von 50 bis 170 °C und Reaktionszeiten von 10⁻⁷ bis 10² h. Der Druck kann sich zwischen 1 Pa bis 200 MPa (=0,00001 bis 2000 bar), bevorzugt zwischen 10 Pa bis 10 MPa bewegen.

Bevorzugt ist ein Energieeintrag von 0,083 bis 10 kW/m³, besonders bevorzugt 0,33 - 1,65 kW/m³.

Bevorzugte Lösungsmittel sind Wasser, Ameisensäure, Essigsäure und protische organische Lösungsmittel, insbesondere Ethanol, Methanol und Propanol.

Eine bevorzugte Reaktionsführung ist, die Aluminiumquelle, Phosphorquelle und die Hilfssäure vorzulegen und nach der Kristallisation die stickstofffreie Base nachzudosieren.

Eine bevorzugte Reaktionsführung ist die Aluminiumquelle und die Phosphorquelle vorzulegen und die Hilfssäure bei der Kristallisation zuzudosieren.

Eine bevorzugte Reaktionsführung ist die Aluminiumquelle und Phosphorquelle vorzulegen, Hilfssäure bei der Kristallisation zuzudosieren und stickstofffreie Base nach der Kristallisation nachzudosieren.

Bevorzugter pH-Wert bei der Kristallisation ist 0 bis 7, besonders bevorzugt 0,5 bis 6 und ganz besonders bevorzugt 1 bis 5. Der verwendete pH-Wert bei der Kristallisation kann sich auf die thermische Stabilität der erfindungsgemäßen Aluminiumphosphit-Mischungen auswirken.

Die Reaktionsführung bestimmt die Konzentrationen der Reaktionspartner bei der Kristallisation. Dadurch werden beispielsweise Teilchengrößen und thermische Stabilität der Produkte bestimmt.

Bevorzugte Feststoffkonzentration ist 2 bis 30 Gew.-%, besonders bevorzugt 5 bis 15 Gew.-%.

Bevorzugtes Verhältnis von Hilfssäure zu Phosphorquelle ist 0,1 bis 50 mol-% per mol Phosphor, besonders bevorzugt 1 bis 20 mol-%, ganz besonders bevorzugt 2 bis 10 mol-%.

Bevorzugtes Verhältnis von Stickstofffreier Base zu Phosphorquelle ist 0,1 bis 70 mol-% per mol Phosphor, besonders bevorzugt 1 bis 40 mol-%, ganz besonders bevorzugt 1 bis 30 mol-%.

Bevorzugtes Verhältnis von Phosphorquelle zur Aluminiumquelle ist 3 mol / 1 mol bis 1 mol / 3 mol, besonders bevorzugt 2,5 mol / 2 mol bis 3,5 mol / 2 mol.

Bevorzugt ist die Verwendung der Mischungen von Aluminiumphosphit mit schwerlöslichen Aluminiumsalzen und stickstofffreien Fremdionen als Flammschutzmittelsynergist.

Bevorzugte Dialkylphosphinsäuren oder deren Salze sind solche der Formel (II) 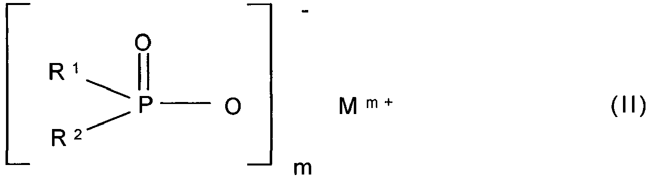 worin
- R¹, R²: gleich oder verschieden sind und C₁-C₆-Alkyl, linear oder verzweigt;
- M: Mg, Ca, Al, Sb, Sn, Ge, Ti, Fe, Zr, Zn, Ce, Bi, Sr, Mn, Li, Na, K, H und/oder eine protonierte Stickstoffbase ;
- m: 1 bis 4 bedeuten.

Bevorzugte Dialkylphosphinsäure-Salze sind Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Geeignet als weitere Flammschutzmittel sind auch bestimmte stickstoffhaltigen Verbindungen (DE-A-196 14 424, DE-A-197 34 437 und DE-A-197 37 727). Bevorzugt handelt es sich dabei um solche der Formeln (III) bis (VIII) oder Gemische davon 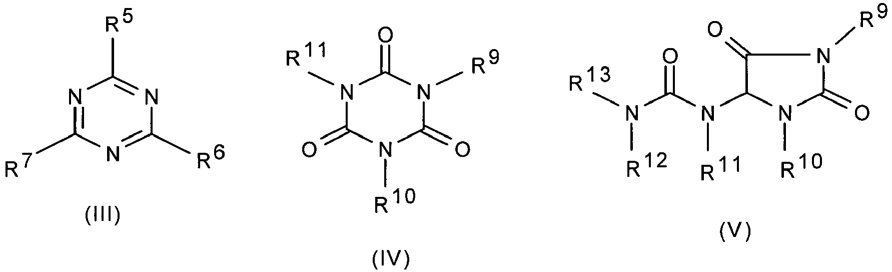 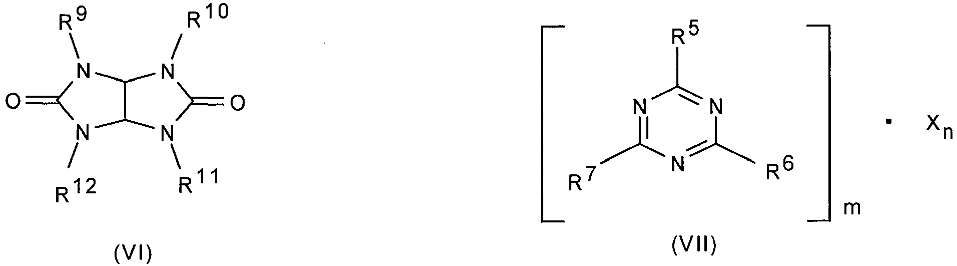 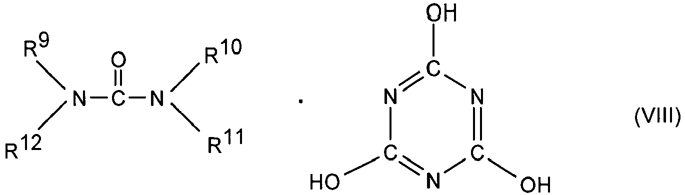 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten; oder um oligomere Ester des Tris(hydroxyethyl)isocyanurats mit aromatischen Polycarbonsäuren.

Die verbleibende Feuchte der erfindungsgemäßen Mischungen von Aluminiumphosphit mit schwerlöslichen Aluminiumsalzen und stickstofffreien Fremdionen beträgt 0,01 bis 9 %, bevorzugt 0,05 bis 0,5 %.

Bevorzugte Polymer-Additive für flammgeschützte Polymerformmassen und flammgeschützte Polymer-Formkörper sind UV-Absorber, Lichtschutzmittel, Gleitmittel, Farbmittel, Antistatika, Nukleierungsmittel, Verstärkungsmittel, Füllstoffe und / oder Synergisten.

Die Erfindung betrifft auch Polymerformkörper, -Filme, -Fäden und -Fasern, enthaltend 0,1 bis 45 Gew.- % der erfindungsgemäßen Mischungen von Aluminiumphosphit mit schwerlöslichen Aluminiumsalzen und stickstofffreien Fremdionen 50 bis 99,9 Gew.-% polystyrolbasierendes Polymer oder Mischungen derselben 0 bis 55 Gew.-% Polymeradditive 0 bis 55 Gew.-% Füllstoff. Bevorzugt ist die Anwendung der erfindungsgemäßen flammgeschützten Polymer-Formkörper als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren. Offenbart ist auch eine Intumeszenz-Flammschutz-Beschichtung enthaltend 1 bis 50 % der erfindungsgemäßen Mischungen von Aluminiumphosphit mit schwerlöslichen Aluminiumsalzen und stickstofffreien Fremdionen, sowie 50 bis 99 Gew.-% Ammoniumpolyphosphat, Bindemittel, Schaumbildner, Füllstoffe, Dialkylphosphinsäuresalze und/oder Polymeradditive.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-Methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF)), Poly-(p-Methylstyrol), Poly-(alpha-Methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Styropor^{®}, Styrodur^{®}, Styrofoam^{®}, Sagex^{®} und Telgopor^{®}.

Bevorzugt handelt es sich bei den Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethylenadipindiamid), Nylon^{®} 6/6 , Fa. DuPont, Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylennonanediamid), Nylon^{®} 6/9, Fa. DuPont), Polyamid 6/10 (Poly(hexamethylensebacamid), Nylon^{®} 6/10, Fa. DuPont), Polyamid 6/12 (Poly(hexamethylendodecanediamid), Nylon^{®} 6/12 , Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid ^{®}L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid; Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit Ethylen-Propylen-Dien-Kautschuk (EPDM) oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Geeignete zur Herstellung von Polymerformmassen einsetzbare Compoundieraggregate sind Einwellenextruder bzw. Einschneckenextruder z. B. der Fa. Berstorff GmbH, Hannover und oder der Fa. Leistritz, Nürnberg sowie Mehrzonenschnecken-Extruder mit Dreizonenschnecken und/oder Kurzkompressionsschnecken und Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Wirksame Schneckenlängen (L) sind bei Einwellenextrudern bzw. Einschneckenextrudern 20 bis 40D und bei bei Mehrzonenschneckenextudern z. B. 25D mit Einzugzone (L=10D), Übergangszone (L=6D), Ausstoßzone (L=9D); bei Doppelschneckenextrudern 8 bis 48D.

Geeignete Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Einsetzbare Compoundieraggregate sind auch Compounder mit gegenläufiger Doppelschnecke z. B. Compex 37- bzw. -70-Typen der Fa. Krauss-Maffei Berstorff sowie Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schnecken.

Herstellung, Verarbeitung und Prüfung von flammgeschützten Kunststoffformmassen und Kunststoff-Formkörpern

Die Flammschutzkomponenten wurden mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt. Nach UL 94 ergeben sich folgende Brandklassen:
V-0: kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende.
V-1: kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0.
V-2: Zündung der Watte durch brennendes Abtropfen, übrige Kriterien wie bei V-1.
Nicht klassifizierbar (nkl): Erfüllt nicht die Brandklasse V-2.

### Test der thermischen Stabilität und Phosphinbildung

Ein wichtiges Kriterium für die thermische Stabilität der erfindungsgemäßen Mischungen von Aluminiumphosphit mit schwerlöslichen Aluminiumsalzen und stickstofffreien Fremdionen ist die Temperatur bei der Zersetzung eintritt und giftiges Phosphin (PH₃) gebildet wird. Dessen Freisetzung muss bei der Herstellung von flammgeschützten Polymeren absolut vermieden werden. Zur Bestimmung wird eine Materialprobe in einem Röhrenofen unter strömendem Stickstoff (30 l/g) erhitzt, indem die Temperatur stufenweise angehoben wird. Die Zersetzungstemperatur ist erreicht, wenn mit einem Nachweisröhrchen der Fa. Dräger mehr als 1 ppm PH₃ (Kurzzeitröhrchen auf Phosphorwasserstoff) nachgewiesen werden kann.

### Bestimmung des Kristallwassergehaltes (Restfeuchte)

Eine Probe wird in einem auf 300 °C geheizten Muffelofen der Fa. Nabertherm 15 Minuten bis zur Gewichtskonstanz erhitzt. Die Masse des Rückstandes bezogen auf die Einwaage ergibt, in Prozent gerechnet und von 100 subtrahiert, den Gewichtsverlust.

Die Erfindung wird durch die nachstehenden Beispiele erläutert. Weitere Angaben (Einwaagen, Bedingungen, Ausbeuten und Analysen) finden sich in den Tabellen 1 und 2.

### Beispiel 1

674 g Aluminiumhydroxid, 1511 g 70 Gew.-%ige phosphorige Säure, 361 g 25 Gew.-%ige Schwefelsäure und 11.067 g vollentsalztes Wasser werden in einem 16 I-Hochdruckrührbehälter der Fa. Pfaudler vorgelegt, auf 150 °C erhitzt und 3 h gerührt. Die entstandene Suspension wird abgelassen und mittels beheizbarem Seitz-Druckfilter bei 80 °C filtriert und mit vollentsalztem Wasser gewaschen, redispergiert und nochmals gewaschen, dann bei 220 °C getrocknet. In sehr hoher Ausbeute wird eine erfindungsgemäße Mischung von Aluminiumphosphit mit schwerlöslichen Aluminiumsalzen und stickstofffreien Fremdionen mit sehr hoher thermischer Stabilität (PH₃-Bildung ab 360 °C) erhalten.

### Beispiel 2

Wie in Beispiel 1 werden Aluminiumhydroxid, 70 Gew.-%ige phosphorige Säure, 25 Gew.-%ige Schwefelsäure und 11.067 g vollentsalztes Wasser vorgelegt, auf 150 °C erhitzt und 23 h gerührt, dann 688 g 25 Gew.-%ige Natronlauge zugegeben und 1 h gerührt. Wie in Beispiel 1 wird die Suspension abgelassen, filtriert, gewaschen und getrocknet. In sehr hoher Ausbeute wird eine erfindungsgemäße Mischung von Aluminiumphosphit mit schwerlöslichen Aluminiumsalzen und stickstofffreien Fremdionen mit sehr hoher thermischer Stabilität (PH₃-Bildung ab 380 °C) erhalten.

### Beispiel 3

Wie in Beispiel 1 werden Aluminiumhydroxid, 70 Gew.-%ige phosphorige Säure und vollentsalztes Wasser vorgelegt, auf 120 °C erhitzt und 6 h gerührt. Während der Reaktionszeit wird der pH-Wert der Lösung durch Zudosierung von 1237 g 25 Gew.-%ige Schwefelsäure auf pH = 1 gehalten. Kurz vor Reaktionsende werden 1054 g 25 Gew.-%ige Natronlauge zugegeben. Wie in Beispiel 1 wird die Suspension abgelassen, filtriert, gewaschen und getrocknet. In sehr hoher Ausbeute wird eine erfindungsgemäße Mischung von Aluminiumphosphit mit schwerlöslichen Aluminiumsalzen und stickstofffreien Fremdionen mit sehr hoher thermischer Stabilität (PH₃-Bildung ab 380 °C) erhalten.

### Beispiel 4

Wie in Beispiel 1 werden Aluminiumhydroxid, 70 Gew.-%ige phosphorige Säure und vollentsalztes Wasser vorgelegt, auf 100 °C erhitzt und 24 h gerührt. Während der Reaktionszeit wird der pH-Wert der Lösung durch Zudosierung von 361g 25 Gew.-%ige Schwefelsäure auf pH = 1,5 gehalten. Wie in Beispiel 1 wird die Suspension abgelassen, filtriert, gewaschen und getrocknet. In sehr hoher Ausbeute wird eine erfindungsgemäße Mischung von Aluminiumphosphit mit schwerlöslichen Aluminiumsalzen und stickstofffreien Fremdionen mit sehr hoher thermischer Stabilität (PH₃-Bildung ab 380 °C) erhalten.

### Beispiel 5 (Vergleich)

Ein nicht erfindungsgemäßes, käufliches Aluminiumphosphit zeigt im Vergleich eine geringere thermische Stabilität (PH₃-Bildung ab 320 °C).

### Flammgeschützte Polymerformmassen und Polymerformkörper

Mit 50 Gew.-% Polyamid 66-Polymer, 30 Gew.-% Glasfasern, 3,6 Gew.-% erfindungsgemäße Mischung von Aluminiumphosphit mit schwerlöslichen Aluminiumsalzen und stickstofffreien Fremdionen nach Beispiel 3 und 16,4 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

Mit 50 Gew.-% Polybutylenterephthalat-Polymer, 30 Gew.-% Glasfasern, 3,6 Gew.-% erfindungsgemäße Mischung von Aluminiumphosphit mit schwerlöslichen Aluminiumsalzen und stickstofffreien Fremdionen nach Beispiel 3 und 16,4 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

**Tabelle 1 Einwaagen und Reaktionsbedingungen**

| Beispiel | Einwaagen | | | | | Bedingungen | |
|---|---|---|---|---|---|---|---|
| | Wasser | phosphorige Säure | Aluminiumhydroxid | Schwefelsäure 25% | Natronlauge 25% | Temperatur | Reaktionszeit |
| | [g] | [g] | [g] | [g] | [g] | [°C] | [h] |
| 1 | 11067 | 1511 | 674 | 361 | - | 150 | 3 |
| 2 | 11067 | 1511 | 674 | 361 | 688 | 150 | 24 |
| 3 | 11067 | 1511 | 674 | 1237 | 1054 | 120 | 6 |
| 4 | 11067 | 1511 | 674 | 361 | - | 100 | 24 |
| 5 (Vgl.) | Aluminiumphosphit | | | | | | |

| | | | | | | | |
|---|---|---|---|---|---|---|---|
| Aluminiumhydroxid: Hydral^{®} 710, Fa. Caldic | | | | | | | |

**Tabelle 2 Analysenergebnisse, Zusammensetzungen der erfindungsgemäßen Produkte, Testergebnisse**

| Beispiel | Analysen | | | | Zus. der Aluminiumphosphit-Mischungen | | | | Gewichtsverlust (Gew.-%, 300 °C) | PH₃-Bildung | Ausbeute |
|---|---|---|---|---|---|---|---|---|---|---|---|
| | Aluminium | Phosphor | Natrium | Sulfat | Aluminiumphosphit | Aluminiumhydroxid | Natrium | Sulfat | | | |
| | [%] | [%] | [%] | [%] | [%] | [%] | [%] | [%] | [%] | [°C] | [%] |
| 1 | 18,3 | 30,6 | 0,007 | 0,993 | 96,7 | 1,4 | 0,007 | 0,093 | 1,27 | 360 | 95,3 |
| 2 | 18,7 | 30,3 | 0,340 | 0,087 | 95,8 | 3,0 | 0,340 | 0,087 | 0,60 | 380 | 97,8 |
| 3 | 17,2 | 29,5 | 5,000 | 0,190 | 93,2 | 0,1 | 5,000 | 0,190 | 0,82 | 380 | 95,1 |
| 4 | 18,4 | 29,2 | 0,003 | 3,000 | 92,3 | 4,0 | 0,003 | 3,000 | 0,60 | 360 | 94,7 |
| 5 (Vgl.) | | | | | 96,0 | 4,0 | | | | 320 | |

## Patentansprüche

1. Mischungen von Aluminiumphosphit mit schwerlöslichen Aluminiumsalzen und stickstofffreien Fremdionen, enthaltend
80 bis 99,898 Gew.-% Aluminiumphosphit der Formel (I)
Al₂(HPO₃)₃ x H₂O (I)
worin x 0 bis 4 bedeutet,
0,1 bis 10 Gew.-% schwerlösliche Aluminiumsalze und
0,002 bis 10 Gew.-% stickstofffreie Fremdionen.

2. Mischungen nach Anspruch 1, enthaltend 88 bis 99,79 Gew.-% Aluminiumphosphit der Formel (I), worin x 0 bis 4 bedeutet,
0,2 bis 5 Gew.-% schwerlösliche Aluminiumsalze und
0,01 bis 7 Gew.-% stickstofffreie Fremdionen.

3. Mischungen nach Anspruch 1 oder 2, enthaltend 94 bis 99,4 Gew.-% Aluminiumphosphit der Formel (I), worin x 0 bis 0,1 bedeutet,
0,3 bis 3 Gew.-% schwerlösliche Aluminiumsalze und
0,3 bis 3 Gew.-% stickstofffreie Fremdionen.

4. Mischungen nach einem oder mehreren der Ansprüche 1 bis 3, **dadurch gekennzeichnet, dass** es sich bei den schwerlöslichen Aluminiumsalzen um Aluminiumhydroxid, Aluminiumhydroxychlorid, Polyaluminiumhydroxyverbindungen, Aluminiumcarbonate, Hydrotalcite (Mg₆Al₂(OH)₁₆CO₃ x nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Aluminiumsulfat und/oder Alunit handelt.

5. Mischungen nach einem oder mehreren der Ansprüche 1 bis 4, **dadurch gekennzeichnet, dass** es sich bei den stickstofffreien Fremdionen um Chloride, komplexe Chloride, Bromide; um Hydroxide, Peroxide, Peroxidhydrate, Sulfite, Sulfate, Sulfathydrate, saure Sulfate, Hydrogensulfate, Peroxosulfate, Peroxodisulfate; um Carbonate, Percarbonate, Stannate; um Borate, Perborate, Perborathydrate; um Formiate, Acetate, Propionate, Lactate und/oder Ascorbate; und/oder um Kationen der Elemente Li, Na, K, Mg, Ca, Ba, Pb, Sn, Cu, Zn, La, Ce, Ti, Zr, V, Cr, Mn, Fe, Co und/oder Ni handelt.

6. Verfahren zur Herstellung von Mischungen von Aluminiumphosphit mit schwerlöslichen Aluminiumsalzen und stickstofffreien Fremdionen nach einem oder mehreren der Ansprüche 1 bis 5, **dadurch gekennzeichnet, dass** man im Verhältnis 2,5 bis 3,5 mol einer nichtsalzartige Phosphorquelle mit 2 mol schwerlöslichem Aluminiumsalz in Gegenwart einer Hilfssäure bei 50 bis 180 °C in einem Lösungsmittel und einer Feststoffkonzentration von 2 bis 60 % kristallisiert.

7. Verfahren nach Anspruch 6, **dadurch gekennzeichnet, dass** es sich bei den schwerlöslichen Aluminiumsalzen um Aluminumhydroxid, Aluminiumhydroxychlorid, Polyaluminiumhydroxyverbindungen, Aluminiumcarbonate, Hydrotalcite (Mg₆Al₂(OH)₁₆CO₃ x nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Alumiumsulfat und/oder Alunit und es sich bei nichtsalzartigen Phosphorquelle um phosphorige Säure, Phosphortrioxid, Phosphortrichlorid und/oder Hypophosphit handelt.

8. Verfahren nach Anspruch 6 oder 7, **dadurch gekennzeichnet, dass** es sich bei der Hilfssäure um Salzsäure, hypochlorige Säure, chlorige Säure, Chlorsäure, Bromwasserstoff, Flusssäure, Jodwasserstoff, Periodsäure, Perchlorsäure, Schwefelsäure, Hydrogensulfat, schweflige Säure, Hydrogensulfite, Peroxoschwefelsäure, Peroxodischwefelsäure, Phosphorsäure, phosphorige Säure, Peroxophosphorsäure, hypophosphorige Säure, Kohlensäuree, Kieselsäure, Hexafluorokieselsäure, Borsäure und/oder Carbonsäuren handelt.

9. Verwendung von Mischungen von Aluminiumphosphit mit schwerlöslichen Aluminiumsalzen und stickstofffreien Fremdionen nach einem oder mehreren der Ansprüche 1 bis 5 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

10. Verwendung von Mischungen von Aluminiumphosphit mit schwerlöslichen Aluminiumsalzen und stickstofffreien Fremdionen nach einem oder mehreren der Ansprüche 1 bis 5 als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist und als Synergist in Flammschutzmittel-Mischungen .

11. Flammgeschützte thermoplastische oder duroplastische Polymerformmasse, Polymer-Formkörper, -Filme, -Fäden und -Fasern enthaltend 0,1 bis 45 Gew.-% Mischungen von Aluminiumphosphit mit schwerlöslichen Aluminiumsalzen und stickstofffreien Fremdionen nach einem oder mehreren der Ansprüche 1 bis 5, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

12. Flammgeschützte thermoplastische oder duroplastische Polymerformmasse, Polymer-Formkörper, -Filme, -Fäden und -Fasern enthaltend 0,1 bis 45 Gew.-% einer Flammschutzmittel-Mischung, welche 0,1 bis 50 Gew.-% Mischungen von Aluminiumphosphit mit schwerlöslichen Aluminiumsalzen und stickstofffreien Fremdionen nach einem oder mehreren der Ansprüche 1 bis 5 und 50 bis 99,9 Gew.-% Flammschutzmittel enthält, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

13. Flammgeschützte thermoplastische oder duroplastische Polymerformmasse, Polymer-Formkörper, -Filme, -Fäden und/oder -Fasern nach Anspruch 12, **dadurch gekennzeichnet, dass** es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

14. Flammgeschützte thermoplastische oder duroplastische Polymerformmasse, Polymer-Formkörper, -Filme, -Fäden und/oder -Fasern nach Anspruch 12, **dadurch gekennzeichnet, dass** es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat handelt.

15. Flammgeschützte thermoplastische oder duroplastische Polymerformmasse, Polymer-Formkörper, -Filme, -Fäden und/oder -Fasern nach Anspruch 12, **dadurch gekennzeichnet, dass** es sich bei dem Flammschutzmittel um Aluminumhypophosphit, Zinkhypophosphit, Calciumhypophosphit, Natriumphosphit, Monophenylphopshinsäure und deren Salze, Mischungen von Dialkylphosphinsäuren und deren Salze und Monoalkylphosphinsäuren und deren Salze, 2-Carboxyethyl-alkylphosphinsäure und deren Salze, 2-Carboxyethyl-methylphosphinsäure und deren Salze, 2-Carboxyethyl-arylphosphinsäure und deren Salze, 2-Carboxyethylphenyl-phosphinsäure und deren Salze, Oxa-10-phosphaphenanthrene (DOPO) und dessen Salze und Addukte an para-Benzochinon bzw Itaconsäure und deren Salze handelt.

## Claims

1. A mixture of aluminum phosphite with sparingly soluble aluminum salts and nitrogen-free extraneous ions, comprising
80 to 99.898% by weight of aluminum phosphite of the formula (I)
Al₂(HPO₃)₃ x H₂O (I)
in which x is 0 to 4,
0.1 to 10% by weight of sparingly soluble aluminum salts and
0.002 to 10% by weight of nitrogen-free extraneous ions.

2. The mixture as claimed in claim 1, comprising 88 to 99.79% by weight of aluminum phosphite of the formula (I) in which x is 0 to 4,
0.2 to 5% by weight of sparingly soluble aluminum salts and
0.01 to 7% by weight of nitrogen-free extraneous ions.

3. The mixture as claimed in claim 1 or 2, comprising 94 to 99.4% by weight of aluminum phosphite of the formula (I) in which x is 0 to 0.1,
0.3 to 3% by weight of sparingly soluble aluminum salts and
0.3 to 3% by weight of nitrogen-free extraneous ions.

4. The mixture as claimed in one or more of claims 1 to 3, wherein the sparingly soluble aluminum salts are aluminum hydroxide, aluminum hydroxychloride, polyaluminum hydroxyl compounds, aluminum carbonates, hydrotalcites (Mg₆Al₂(OH)₁₆CO₃ x nH₂O), dihydroxyaluminum sodium carbonate (NaAl(OH)₂CO₃), aluminum oxides, aluminum oxide hydrate, mixed aluminum oxide hydroxides, basic aluminum sulfate and/or alunite.

5. The mixture as claimed in one or more of claims 1 to 4, wherein the nitrogen-free extraneous ions are chlorides, complex chlorides, bromides; hydroxides, peroxides, peroxide hydrates, sulfites, sulfates, sulfate hydrates, acidic sulfates, hydrogensulfates, peroxosulfates, peroxodisulfates; carbonates, percarbonates, stannates; borates, perborates, perborate hydrates; formates, acetates, propionates, lactates and/or ascorbates; and/or cations of the elements Li, Na, K, Mg, Ca, Ba, Pb, Sn, Cu, Zn, La, Ce, Ti, Zr, V, Cr, Mn, Fe, Co and/or Ni.

6. A process for preparing mixtures of aluminum phosphite with sparingly soluble aluminum salts and nitrogen-free extraneous ions as claimed in one or more of claims 1 to 5, which comprises crystallizing in a ratio of 2.5 to 3.5 mol of a non-salt phosphorus source with 2 mol of sparingly soluble aluminum salt in the presence of an auxiliary acid at 50 to 180°C in a solvent and at a solids concentration of 2 to 60%.

7. The process as claimed in claim 6, wherein the sparingly soluble aluminum salts are aluminum hydroxide, aluminum hydroxychloride, polyaluminum hydroxyl compounds, aluminum carbonates, hydrotalcites (Mg₆Al₂(OH)₁₆CO₃ x nH₂O), dihydroxyaluminum sodium carbonate (NaAl(OH)₂CO₃), aluminum oxides, aluminum oxide hydrate, mixed aluminum oxide hydroxides, basic aluminum sulfate and/or alunite, and the non-salt phosphorus source is phosphorous acid, phosphorus trioxide, phosphorus trichloride and/or hypophosphite.

8. The process as claimed in claim 6 or 7, wherein the auxiliary acid is hydrochloric acid, hypochlorous acid, chlorous acid, chloric acid, hydrogen bromide, hydrofluoric acid, hydrogen iodide, periodic acid, perchloric acid, sulfuric acid, hydrogensulfate, sulfurous acid, hydrogensulfites, peroxosulfuric acid, peroxodisulfuric acid; phosphoric acid, phosphorous acid, peroxophosphoric acid, hypophosphorous acid, carbonic acid, silicic acid, hexafluorosilicic acid, boric acid and/or carboxylic acids.

9. The use of mixtures of aluminum phosphite with sparingly soluble aluminum salts and nitrogen-free extraneous ions as claimed in one or more of claims 1 to 5 as an intermediate for further syntheses, as a binder, as a crosslinker or accelerator in the curing of epoxy resins, polyurethanes, unsaturated polyester resins, as polymer stabilizers, as crop protection compositions, as sequestrants, as a mineral oil additive, as an anticorrosive, in washing and cleaning composition applications, in electronics applications.

10. The use of mixtures of aluminum phosphite with sparingly soluble aluminum salts and nitrogen-free extraneous ions as claimed in one or more of claims 1 to 5 as a flame retardant, especially flame retardant for clearcoats and intumescent coatings, flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and as a synergist in flame retardant mixtures.

11. A flame-retardant thermoplastic or thermoset polymer molding composition or polymer molding, film, filament or fiber comprising 0.1 to 45% by weight of mixtures of aluminum phosphite with sparingly soluble aluminum salts and nitrogen-free extraneous ions as claimed in one or more of claims 1 to 5, 55 to 99.9% by weight of thermoplastic or thermoset polymer or mixtures thereof, 0 to 55% by weight of additives and 0 to 55% by weight of filler or reinforcing materials, where the sum of the components is 100% by weight.

12. A flame-retardant thermoplastic or thermoset polymer molding composition or polymer molding, film, filament or fiber comprising 0.1 to 45% by weight of a flame retardant mixture comprising 0.1 to 50% by weight of mixtures of aluminum phosphite with sparingly soluble aluminum salts and nitrogen-free extraneous ions as claimed in one or more of claims 1 to 5 and 50 to 99.9% by weight of flame retardant, 55 to 99.9% by weight of thermoplastic or thermoset polymer or mixtures thereof, 0 to 55% by weight of additives and 0 to 55% by weight of filler or reinforcing materials, where the sum of the components is 100% by weight.

13. The flame-retardant thermoplastic or thermoset polymer molding composition or polymer molding, film, filament or fiber as claimed in claim 12, wherein the flame retardant comprises dialkylphosphinic acids and/or salts thereof; condensation products of melamine and/or reaction products of melamine with phosphoric acid and/or reaction products of condensation products of melamine with polyphosphoric acid or mixtures thereof; nitrogen-containing phosphates of the formulae (NH₄)_{y} H_{3-y} PO₄ and (NH₄ PO₃)_{z}, where y is 1 to 3 and z is 1 to 10 000; benzoguanamine, tris(hydroxyethyl) isocyanurate, allantoin, glycoluril, melamine, melamine cyanurate, dicyandiamide and/or guanidine; magnesium oxide, calcium oxide, aluminum oxide, zinc oxide, manganese oxide, tin oxide, aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

14. The flame-retardant thermoplastic or thermoset polymer molding composition or polymer molding, film, filament or fiber as claimed in claim 12, wherein the flame retardant comprises melam, melem, melon, dimelamine pyrophosphate, melamine polyphosphate, melam polyphosphate, melon polyphosphate and/or melem polyphosphate and/or mixed poly salts thereof and/or ammonium hydrogenphosphate, ammonium dihydrogenphosphate and/or ammonium polyphosphate.

15. The flame-retardant thermoplastic or thermoset polymer molding composition or polymer molding, film, filament or fiber as claimed in claim 12, wherein the flame retardant comprises aluminum hypophosphite, zinc hypophosphite, calcium hypophosphite, sodium phosphite, monophenylphosphinic acid and salts thereof, mixtures of dialkylphosphinic acids and salts thereof and monoalkylphosphinic acids and salts thereof, 2-carboxyethylalkylphosphinic acid and salts thereof, 2-carboxyethylmethylphosphinic acid and salts thereof, 2-carboxyethylarylphosphinic acid and salts thereof, 2-carboxyethylphenylphosphinic acid and salts thereof, oxa-10-phosphaphenanthrene (DOPO) and salts thereof and adducts onto para-benzoquinone, or itaconic acid and salts thereof.

## Revendications

1. Mélanges de phosphite d'aluminium avec des sels d'aluminium difficilement solubles et des ions étrangers sans azote, contenant :
80 à 99,898 % en poids de phosphite d'aluminium de formule (I)
Al₂(HPO₃)₃ x H₂O (I)
dans laquelle x signifie 0 à 4,
0,1 à 10 % en poids de sels d'aluminium difficilement solubles et
0,002 à 10 % en poids d'ions étrangers sans azote.

2. Mélanges selon la revendication 1, contenant 88 à 99,79 % en poids de phosphite d'aluminium de formule (I), dans laquelle x signifie 0 à 4,
0,2 à 5 % en poids de sels d'aluminium difficilement solubles et
0,01 à 7 % en poids d'ions étrangers sans azote.

3. Mélanges selon la revendication 1 ou 2, contenant 94 à 99,4 % en poids de phosphite d'aluminium de formule (I), dans laquelle x signifie 0 à 0,1,
0,3 à 3 % en poids de sels d'aluminium difficilement solubles et
0,3 à 3 % en poids d'ions étrangers sans azote.

4. Mélanges selon une ou plusieurs des revendications 1 à 3, **caractérisés en ce que** les sels d'aluminium difficilement solubles consistent en de l'hydroxyde d'aluminium, de l'hydroxychlorure d'aluminium, des composés d'hydroxy-polyaluminium, des carbonates d'aluminium, des hydrotalcites (Mg₆Al₂(OH)₁₆CO₃ x nH₂O), du carbonate de dihydroxyaluminium-sodium (NaAl(OH)₂CO₃), des oxydes d'aluminium, de l'hydrate d'oxyde d'aluminium, des oxyhydroxydes d'aluminium mixtes, du sulfate d'aluminium basique et/ou de l'alunite.

5. Mélanges selon une ou plusieurs des revendications 1 à 4, **caractérisés en ce que** les ions étrangers sans azote consistent en des chlorures, des chlorures complexes, des bromures ; en des hydroxydes, des peroxydes, des hydrates de peroxydes, des sulfites, des sulfates, des hydrates de sulfates, des sulfates acides, des hydrogénosulfates, des peroxosulfates, des peroxodisulfates ; en des carbonates, des percarbonates, des stannates ; en des borates, des perborates, des hydrates de perborates ; en des formiates, des acétates, des propionates, des lactates et/ou des ascorbates ; et/ou en des cations des éléments Li, Na, K, Mg, Ca, Ba, Pb, Sn, Cu, Zn, La, Ce, Ti, Zr, V, Cr, Mn, Fe, Co et/ou Ni.

6. Procédé de fabrication de mélanges de phosphite d'aluminium avec des sels d'aluminium difficilement solubles et des ions étrangers sans azote selon une ou plusieurs des revendications 1 à 5, **caractérisé en ce qu'**une source de phosphore non saline est cristallisée en un rapport de 2,5 à 3,5 moles avec 2 moles d'un sel d'aluminium difficilement soluble en présence d'un acide auxiliaire à une température de 50 à 180 °C dans un solvant et à une concentration en solides de 2 à 60 %.

7. Procédé selon la revendication 6, **caractérisé en ce que** les sels d'aluminium difficilement solubles consistent en de l'hydroxyde d'aluminium, de l'hydroxychlorure d'aluminium, des composés d'hydroxy-polyaluminium, des carbonates d'aluminium, des hydrotalcites (Mg₆Al₂(OH)₁₆CO₃ x nH₂O), du carbonate de dihydroxyaluminium-sodium (NaAl(OH)₂CO₃), des oxydes d'aluminium, de l'hydrate d'oxyde d'aluminium, des oxyhydroxydes d'aluminium mixtes, du sulfate d'aluminium basique et/ou de l'alunite, et la source de phosphore non saline consiste en l'acide phosphoreux, le trioxyde de phosphore, le trichlorure de phosphore et/ou l'hypophosphite.

8. Procédé selon la revendication 6 ou 7, **caractérisé en ce que** l'acide auxiliaire est l'acide chlorhydrique, l'acide hypochloreux, l'acide chloreux, l'acide chlorique, le bromure d'hydrogène, l'acide fluorhydrique, l'iodure d'hydrogène, l'acide periodique, l'acide perchlorique, l'acide sulfurique, le sulfate d'hydrogène, l'acide sulfureux, des hydrogénosulfites, l'acide peroxosulfurique, l'acide peroxodisulfurique, l'acide phosphorique, l'acide phosphoreux, l'acide peroxophosphorique, l'acide hypophosphoreux, l'acide carbonique, l'acide silicique, l'acide hexafluorosilicique, l'acide borique et/ou des acides carboxyliques.

9. Utilisation de mélanges de phosphite d'aluminium avec des sels d'aluminium difficilement solubles et des ions étrangers sans azote selon une ou plusieurs des revendications 1 à 5 en tant que produit intermédiaire pour d'autres synthèses, en tant que liants, en tant qu'agents de réticulation ou accélérateurs lors du durcissement de résines époxy, de polyuréthanes, de résines de polyester insaturées, en tant que stabilisateurs de polymères, en tant qu'agents phytoprotecteurs, en tant que séquestrants, en tant qu'additif pour huile minérale, en tant qu'agents anticorrosion, dans des applications de détergents, dans des applications électroniques.

10. Utilisation de mélange de phosphite d'aluminium avec des sels d'aluminium difficilement solubles et des ions étrangers sans azote selon une ou plusieurs des revendications 1 à 5 en tant qu'agent ignifuge, notamment agent ignifuge pour vernis transparents et revêtements intumescents, agent ignifuge pour le bois et les autres produits cellulosiques, en tant qu'agent ignifuge réactif et/ou non réactif pour polymères, pour la fabrication de matériaux de moulage polymères ignifugés, pour la fabrication de corps moulés polymères ignifugés et/ou pour le traitement ignifugeant de polyesters et de tissus cellulosiques purs et mixtes par imprégnation, ainsi qu'en tant que synergiste et en tant que synergiste dans des mélanges d'agents ignifuges.

11. Matériau de moulage polymère thermoplastique ou duroplastique, corps moulés, films, fils et fibres polymères ignifugés contenant 0,1 à 45 % en poids de mélanges de phosphite d'aluminium avec des sels d'aluminium difficilement solubles et des ions étrangers sans azote selon une ou plusieurs des revendications 1 à 5, 55 à 99,9 % en poids d'un polymère thermoplastique ou duroplastique ou de mélanges de celui-ci, 0 à 55 % en poids d'additifs et 0 à 55 % en poids de charges ou de matériaux de renforcement, la somme des composants étant de 100 % en poids.

12. Matériau de moulage polymère thermoplastique ou duroplastique, corps moulés, films, fils et fibres polymères ignifugés contenant 0,1 à 45 % en poids d'un mélange d'agents ignifuges, qui contient 0,1 à 50 % en poids de mélanges de phosphite d'aluminium avec des sels d'aluminium difficilement solubles et des ions étrangers sans azote selon une ou plusieurs des revendications 1 à 5 et 50 à 99,9 % en poids d'agents ignifuges, 55 à 99,9 % en poids d'un polymère thermoplastique ou duroplastique ou de mélanges de celui-ci, 0 à 55 % en poids d'additifs et 0 à 55 % en poids de charges ou de matériaux de renforcement, la somme des composants étant de 100 % en poids.

13. Matériau de moulage polymère thermoplastique ou duroplastique, corps moulés, films, fils et/ou fibres polymères ignifugés selon la revendication 12, **caractérisés en ce que** l'agent ignifuge consiste en des acides dialkylphosphiniques et/ou leurs sels ; en des produits de condensation de mélamine et/ou des produits de réaction de mélamine avec de l'acide phosphorique et/ou des produits de réaction de produits de condensation de mélamine avec de l'acide polyphosphorique ou des mélanges de celui-ci ; en des phosphates azotés de formule (NH₄)_{y}H_{3-y}PO₄ ou (NH₄PO₃)_{z}, avec y = 1 à 3 et z = 1 à 10 000 ; en la benzoguanamine, l'isocyanurate de tris(hydroxyéthyle), l'allantoïne, le glycouril, la mélamine, le cyanurate de mélamine, le dicyandiamide et/ou la guanidine ; en l'oxyde de magnésium, l'oxyde de calcium, l'oxyde d'aluminium, l'oxyde de zinc, l'oxyde de manganèse, l'oxyde d'étain, l'hydroxyde d'aluminium, la boehmite, le dihydrotalcite, l'hydrocalumite, l'hydroxyde de magnésium, l'hydroxyde de calcium, l'hydroxyde de zinc, l'oxyhydrate d'étain, l'hydroxyde de manganèse, le borate de zinc, le silicate de zinc basique et/ou le stannate de zinc.

14. Matériau de moulage polymère thermoplastique ou duroplastique, corps moulés, films, fils et/ou fibres polymères ignifugés selon la revendication 12, **caractérisés en ce que** l'agent ignifuge consiste en le mélam, le mélem, le mélon, le pyrophosphate de dimélamine, le polyphosphate de mélamine, le polyphosphate de mélam, le polyphosphate de mélon et/ou le polyphosphate de mélem et/ou des polysels mixtes de ceux-ci et/ou en l'hydrogénophosphate d'ammonium, le dihydrogénophosphate d'ammonium et/ou le polyphosphate d'ammonium.

15. Matériau de moulage polymère thermoplastique ou duroplastique, corps moulés, films, fils et/ou fibres polymères ignifugés selon la revendication 12, **caractérisés en ce que** l'agent ignifuge consiste en l'hypophosphite d'aluminium, l'hypophosphite de zinc, l'hypophosphite de calcium, le phosphite de sodium, l'acide monophénylphosphinique et ses sels, les mélanges d'acides dialkylphosphiniques et leurs sels et d'acides monoalkylphosphiniques et leurs sels, l'acide 2-carboxyéthyl-alkylphosphinique et ses sels, l'acide 2-carboxyéthyl-méthylphosphinique et ses sels, l'acide 2-carboxyéthyl-arylphosphinique et ses sels, l'acide 2-carboxyéthylphényl-phosphinique et ses sels, l'oxa-10-phosphaphénanthrène (DOPO) et ses sels et les adduits de para-benzoquinone ou d'acide itaconique et leurs sels.
